# EUROPEAN PATENT APPLICATION

(11) **EP 2 196 650 A1**
(43) Date of publication of application: **16.06.2010**
(21) Application number: 08834639.0
(22) Date of filing: 26.09.2008
(51) Int. Cl.: F02C 3/34, F01K 23/10, F02C 3/28, F02C 3/30, F02C 6/18, F02C 7/08

(54) **TURBINE FACILITY AND POWER GENERATING APPARATUS**

(30) Priority: 28.09.2007 JP 2007255676
(71) Applicant: Central Research Institute of Electric Power Industry, Tokyo 100-8126 (JP)
(72) Inventor: KODA, Eiichi, Yokosuka-shi Kanagawa 240-0196 (JP); SHIRAI, Hiromi, Yokosuka-shi Kanagawa 240-0196 (JP); HARA, Saburo, Yokosuka-shi Kanagawa 240-0196 (JP)
(74) Representative: Strehl Schübel-Hopf & Partner
(86) International application number: PCT/JP2008/067488
(87) International publication number: WO 2009/041617

(57) **Abstract**

A working fluid consisting essentially of CO₂, a molecule having a low ratio of specific heats, is expanded by a gas turbine 4. Thus, even if the pressure changes between the inlet side and the outlet side of the gas turbine 4, a temperature drop as a temperature change is suppressed, so that an exhaust gas having a high temperature is obtained. Consequently, the difference between the temperature of the working fluid on the outlet side of a compressor 2 and the temperature of the exhaust gas on the outlet side of the gas turbine 4 is kept so great that a regeneration effect is enhanced, whereby thermal efficiency is increased without a decrease in the output.

## Description

### Technical Field

This invention relates to turbine equipment for obtaining power by expanding a combustion fluid.

The present invention also relates to a power generating plant equipped with a gasification furnace which forms a fuel gas from a carbon-based fuel, and a gas turbine which obtains power by a working fluid produced by combustion of the fuel gas from the gasification furnace.

### Background Art

Various power generating plants equipped with a gas turbine, which obtains power by expanding a combustion gas from a combustor, have been put to practical use. With such power generating plants, energy is effectively recovered to increase power efficiency. As a fuel fed to the combustor, natural gas, for example, is applied, and it is burned in the combustor together with air to obtain the combustion gas. Alternatively, coal is converted into a coal gasification gas, and the coal gasification gas is burned in the combustor to obtain the combustion gas (see, for example, Patent Document 1 and Patent Document 2) .

In recent years, further efficiency has been demanded of power generating plants. Thus, contrivances have been carried out, such as to increase output by intake air cooling, etc., and reheat the fluid fed to the combustor, or raise the temperature of the fluid by an exhaust gas from the gas turbine, thereby enhancing thermal efficiency. With intake air cooling or reheating, output is increased, but thermal efficiency cannot be improved, for example, because of an increase in fuel consumption. Moreover, the temperature of the fluid fed to the combustor is raised using the exhaust gas from the gas turbine, whereby thermal efficiency can be improved. However, the temperature of the outlet of the gas turbine needs to be maintained high. To maintain thermal efficiency, it is necessary to take measures for lowering output, such as a reduction in the pressure ratio of the gas turbine.

To maintain output, it is conceivable to separately provide equipment for improving thermal efficiency, or to enhance the capacity of power instruments and upsize equipment. However, such attempts at increasing efficiency result in high costs of equipment and instruments. Thus, there is a demand for technologies for increasing efficiency without upsizing equipment.

As described above, in order to increase efficiency, it is an important challenge to make the utmost use of thermal energy within the system and induce no decrease in output, or raise output. Various contrivances are appearing along this line. Under these circumstances, the inventors of the present invention have focused on heat recovery and contrivances on instruments, and have paid attention to the physical properties of a working fluid for obtaining electricity generating power upon expansion by a gas turbine. Through these efforts, they have found that the energy of an exhaust gas after finishing work can be recovered maximally by utilizing the physical properties of the working fluid themselves.

Patent Document 1: JP-A-4-244504
Patent Document 2: JP-A-2007-107472

### Disclosure of the Invention

### Problems to be Solved by the Invention

The present invention has been accomplished in the light of the above-described situations. It is an object of the invention to provide turbine equipment capable of maintaining thermal efficiency without lowering output.

Also, the present invention has been accomplished in the light of the above-described situations. It is an object of the invention to provide a power generating plant equipped with a gas turbine, which can increase efficiency without upsizing equipment.

### Means for Solving the Problems

The turbine equipment of the present invention according to claim 1, intended for attaining the above objects, comprises: a combustor for forming a combustion gas consisting essentially of a molecule having a low ratio of specific heats; and a gas turbine for obtaining power by expanding the combustion gas of the combustor, wherein the combustion gas is used as a working fluid, and a temperature difference between the combustion gas of the combustor and the working fluid expanded by the gas turbine is suppressed.

With the invention according to claim 1, the combustion gas consisting essentially of a molecule having a low ratio of specific heats is formed by the combustor, and expanded by the gas turbine. Thus, even if the pressure changes between the inlet side and the outlet side of the gas turbine, a temperature drop as a temperature change can be suppressed, so that an exhaust gas having a high temperature can be obtained. Hence, heat recovery of the exhaust gas can be performed efficiently, and there can be provided turbine equipment capable of maintaining the thermal efficiency without lowering the output.

The turbine equipment of the present invention according to claim 2 is the turbine equipment according to claim 1, **characterized in that** a fuel for the combustor is a fuel rich in carbon components.

The turbine equipment of the present invention according to claim 3 is the turbine equipment according to claim 1, **characterized in that** a fuel for the combustor is a fuel obtained by gasifying a fuel rich in carbon components.

The turbine equipment of the present invention according to claim 4 is the turbine equipment according to claim 3, **characterized in that** the fuel rich in carbon components to be gasified is coal.

The turbine equipment of the present invention according to claim 5 is the turbine equipment according to any one of claims 1 to 4, **characterized in that** the working fluid is a fluid containing CO₂.

Since the fuel rich in carbon components is burned to form the working fluid, the working fluid consisting essentially of a molecule having a low ratio of specific heats can be easily obtained. Moreover, since the working fluid is a fluid containing CO₂, the fluid containing CO₂, which is the working fluid consisting essentially of a molecule having a low ratio of specific heats, can be easily obtained by burning the fuel gas formed by gasification of coal. In gasifying coal, the fuel gas is formed by the reaction between the coal and O₂ or CO₂ or H₂O.

The turbine equipment of the present invention according to claim 6 is the turbine equipment according to any one of claims 1 to 5, further comprising: a compressor for compressing the working fluid, which is an exhaust after finishing of work in the gas turbine, and sending the compressed working fluid to the combustor; and a regenerative heat exchanger for raising a temperature of the compressed working fluid, which has been compressed by the compressor, by means of the exhaust after finishing of work in the gas turbine.

With the present invention according to claim 6, the working fluid having a low ratio of specific heats is applied, whereby the temperature at the outlet of the compressor can be kept low, while the temperature of the exhaust from the gas turbine can be maintained high. Thus, heat recovery in the regenerative heat exchanger can be performed efficiently to keep the thermal efficiency high.

The turbine equipment of the present invention according to claim 7 is the turbine equipment according to claim 6, **characterized in that** the combustor burns a fuel gas by use of O₂.

The turbine equipment of the present invention according to claim 8 is the turbine equipment according to claim 7, **characterized in that** the O₂ is supplied to the compressed working fluid, which has been compressed by the compressor, or to the working fluid whose temperature has been raised by the regenerative heat exchanger.

Hence, when the fuel rich in carbon components is burned using O₂, O₂ can be supplied unerringly to the working fluid.

The power generating plant of the present invention according to claim 8, intended for attaining the above objects, comprises: a gasification furnace for forming a fuel gas by reaction of a carbon-based fuel; a combustor for burning the fuel gas formed by the gasification furnace; a gas turbine for obtaining power by expanding a combustion gas from the combustor; a heat recovery steam generator for recovering heat from an exhaust after finishing of work in the gas turbine to generate steam; and a compressor for compressing a part of the exhaust after finishing of work in the gas turbine, and sending a compressed working fluid to the combustor.

With the present invention according to claim 8, the fuel gas formed by the reaction of the carbon-based fuel is burned by the combustor, and a combustion gas is used as the working fluid and expanded by the gas turbine to obtain electricity generating power. The exhaust of the gas turbine is heat-recovered by the heat recovery steam generator, and a part of the exhaust is compressed and sent to the combustor. Thus, the working fluid containing CO₂, which is a working fluid having a low ratio of specific heats, can be circulated. Furthermore, because of the working fluid having a low ratio of specific heats, the fluid can be operated, with a temperature change in response to a pressure change being small. Consequently, the power generating plant equipped with a gas turbine can be constructed which can enhance efficiency without upsizing the plant.

The power generating plant of the present invention according to claim 10 is the power generating plant according to claim 9, further comprising: a regenerative heat exchanger for raising a temperature of the compressed working fluid, which has been compressed by the compressor, by means of the exhaust after finishing of work in the gas turbine.

With the present invention according to claim 10, the working fluid containing CO₂ having a low ratio of specific heats is applied, whereby the temperature at the outlet of the compressor can be kept low, while the temperature of the exhaust from the gas turbine can be maintained high. Thus, heat recovery in the regenerative heat exchanger can be performed efficiently to keep thermal efficiency high.

The power generating plant of the present invention according to claim 11 is the power generating plant according to claim 9 or 10, further comprising: cooling means for obtaining high purity CO₂ by cooling a part of an exhaust from the heat recovery steam generator to condense and remove water.

The power generating plant of the present invention according to claim 12 is the power generating plant according to claim 11, further comprising: a supply system for supplying the high purity CO₂ obtained by the cooling means to the gasification furnace.

The power generating plant of the present invention according to claim 13 is the power generating plant according to claim 12, **characterized in that** the gasification furnace is a coal gasification furnace for forming a coal gasification gas by a reaction between coal and a fluid containing the high purity CO₂.

The power generating plant of the present invention according to claim 14 is the power generating plant according to any one of claims 9 to 13, further comprising: impurities removing means for removing impurities from a part of the exhaust after finishing of work in the gas turbine.

The power generating plant of the present invention according to claim 15 is the power generating plant according to any one of claims 9 to 14, further comprising a steam turbine for obtaining power by expanding the steam generated by the heat recovery steam generator.

Thus, there can be provided the power generating plant equipped with the gas turbine capable of enhancing efficiency with the use of the coal gasification gas. The steam turbine is further combined therewith, whereby facilities for an integrated coal gasification combined cycle power generation plant (IGCC) with increasedefficiency can beconstructed. Furthermore, impurities are removed from part of the exhaust after finishing of work in the gas turbine. Thus, the facilities for removing impurities of the coal gasification gas to be supplied to the combustor can be markedly simplified, and energy loss can be reduced.

### Effects of the Invention

The turbine equipment of the present invention can be provided as turbine equipment capable of maintaining thermal efficiency without lowering output.

The power generating plant of the present invention can be provided as a power generating plant equipped with a gas turbine, which can increase efficiency without upsizing equipment.

### Brief Description of the Drawings

[Fig. 1] is a conceptual system diagram of turbine equipment according to an embodiment of the present invention.
[Fig. 2] is a conceptual view of a power generating plant according to the embodiment of the present invention.
[Fig. 3] is a schematic system diagram of the power generating plant according to the embodiment of the present invention.

### Description of the Numerals

- 1: Turbine equipment
- 2,28, 31: Compressor
- 3: Combustor
- 4: Gas turbine
- 5: Exhaust path
- 6: Exhaust heat recovery means
- 7: Regenerative heat exchanger
- 8: Path
- 11: Gasification furnace
- 12: Gas purifier
- 13: Heat recovery steam generator (HRSG)
- 14: Steam turbine
- 15: Condenser
- 21: Coal gasification equipment
- 22: Metal filter
- 23: Dry desulfurizer
- 24: Oxygen producing equipment
- 25: Condenser
- 26: Feed water heater
- 27,30: Steam separator
- 29: Mercury removal apparatus

### Best Mode for Carrying Out the Invention

A power generating plant according to an embodiment of the present invention is equipped with a gasification furnace which forms a gasification gas (fuel gas) by the reaction of coal caused when a high concentration of O₂ is blown in. The power generating plant is designed to burn the fuel gas, which has been formed in the gasification furnace, by a combustor to form a combustion gas, expand the combustion gas from the combustor by a gas turbine, thereby obtaining power, compress a part of an exhaust after finishing of work in the gas turbine by a compressor, send it to the combustor, and supply CO₂, which is the exhaust gas after finishing of work in the gas turbine, to the gasification furnace.

The high concentration of O₂ (or CO₂ or H₂O) is blown in to react coal, thereby forming the fuel gas. This fuel gas is burned with O₂, whereby the resulting combustion gas (working fluid) becomes a working fluid consisting essentially of CO₂ which is a molecule having a low ratio of specific heats. This ratio of specific heats is as low as 1.20 or so. Thus, even if the pressure changes between the inlet side and the outlet side of the gas turbine upon expansion of the working fluid in the gas turbine, a temperature drop as a temperature change can be suppressed, so that an exhaust gas having a high temperature can be obtained. Hence, the heat recovery of the exhaust gas can be performed efficiently, and it becomes possible to construct a power generating plant equipped with turbine equipment which can maintain thermal efficiency without lowering output.

The equipment is particularly configured to compress the exhaust from the gas turbine, charge it into the combustor, and burn it together with the gasification gas and O₂. This configuration makes it useful to apply a regenerative heat exchanger where the CO₂ fluid after compression is heated by the exhaust from the gas turbine. That is, the CO₂ fluid consists essentially of a molecule having a low ratio of specific heats. Thus, a rise in the temperature on the outlet side of the compressor, and a fall in the temperature of the exhaust from the gas turbine is suppressed. Consequently, the difference between the temperature at the outlet of the compressor and the temperature at the outlet of the gas turbine becomes so great that the regeneration effect is enhanced, whereby the thermal efficiency can be increased without a decrease in the output.

In the case of the cycle of air combustion, the nitrogen concentration in the combustion gas is so high that the concentration of CO₂ is restricted, and the ratio of specific heats cannot be rendered low. In the case of a natural gas fuel, the ratio of carbon to hydrogen in the fuel is of the order of 1:3 to 4. Thus, the concentration of CO₂ of the order of 40% is the upper limit, and a working fluid consisting essentially of CO₂ is not obtainable.

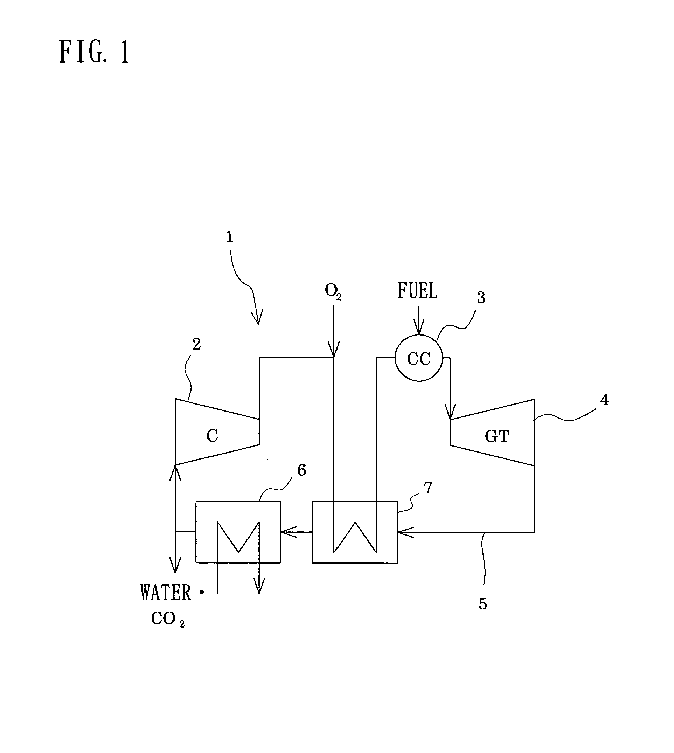

The turbine equipment will be described based on Fig. 1. Fig. 1 shows the conceptual system of the turbine equipment according to the embodiment of the present invention.

As shown in the drawing, turbine equipment 1 is equipped with a compressor 2, a combustor 3, and a gas turbine 4. The combustor 3 is charged with a fuel gas (coal gasification gas) for forming a combustion gas consisting essentially of a molecule having a low ratio of specific heats. In the combustor 3, the fuel gas is burned together with a high concentration of O₂ (and CO₂) to obtain a combustion gas (working fluid) consisting essentially of CO₂. The combustion gas produced by combustion in the combustor 3 is expanded in the gas turbine 4 to obtain electricity generating power. An exhaust gas after completion of work in the gas turbine 4 is passed through an exhaust path 5, and subjected to heat recovery by a regenerative heat exchanger 7 and an exhaust heat recovery means 6. The heat-recovered working fluid has surplus CO₂ and water discharged, and is compressed by the compressor 2. The above-mentioned high concentration O₂ is supplied to the outlet side of the compressor 2. The high concentration O₂ can also be supplied to the inlet side of the combustor 3.

With the above-described turbine equipment 1, the working fluid consisting essentially of a molecule having a low ratio of specific heats (CO₂) is circulated, and expanded in the gas turbine 4. Thus, even if the pressure changes between the inlet side and the outlet side of the gas turbine 4, a temperature fall as the temperature change can be suppressed, so that an exhaust gas having a high temperature can be obtained. Moreover, the compressed fluid compressed by the compressor 2 is a fluid containing CO₂ having a low ratio of specific heats, thus enabling a temperature rise on the outlet side to be suppressed.

Consequently, the difference between the temperature of the fluid on the outlet side of the compressor 2 and the temperature of the exhaust gas on the outlet side of the gas turbine 4 becomes so great that the regeneration effect is enhanced, whereby the thermal efficiency can be increased without a decrease in the output. Hence, heat recovery of the exhaust gas can be performed ef f iciently, with the result that there can be provided the turbine equipment 1 capable of maintaining the thermal efficiency without lowering the output.

With the above-mentioned turbine equipment 1, heat recovery of the exhaust gas of the gas turbine 4 is performed by the regenerative heat exchanger 7 to increase the regeneration efficiency. However, the working fluid consisting essentially of a molecule having a low ratio of specific heats (CO₂) is expanded. As a result, a fall in the temperature in response to a change in the pressure is suppressed, and the temperature of the exhaust gas of the gas turbine 4 is maintained at a high value. Thus, it is also possible to adopt a configuration in which heat recovery is performed by other instrument appropriate to the heat recovery of the exhaust gas maintained at a high temperature.

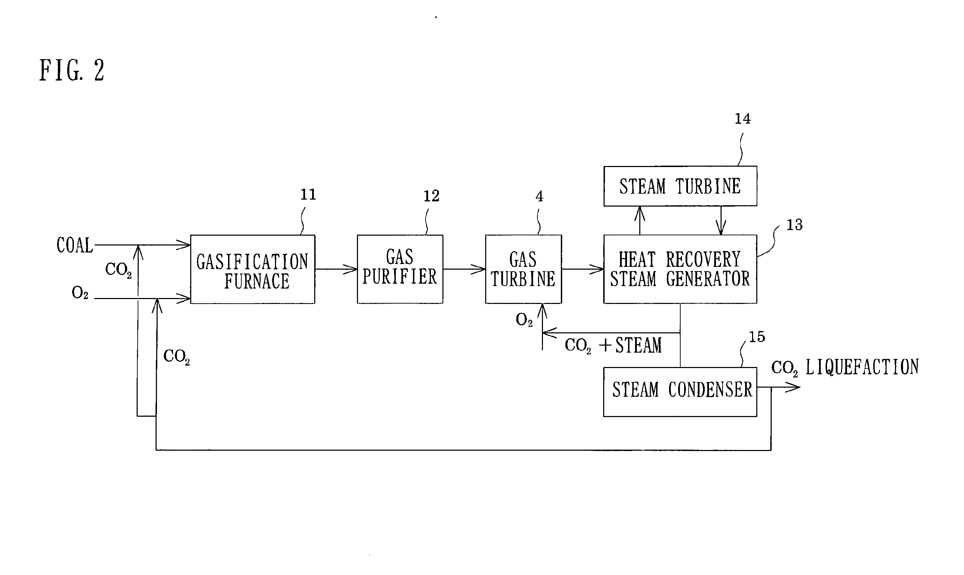

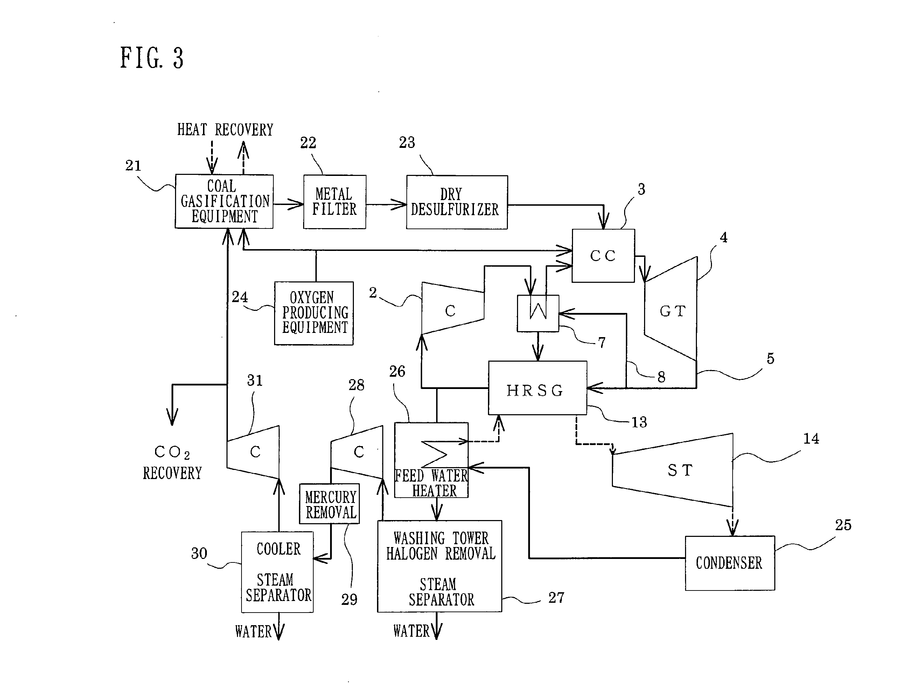

An integrated coal gasification combined cycle power generation plant (IGCC) as a power generation plant equipped with the above-described turbine equipment 1 will be described based on Figs. 2 and 3.

Fig. 2 shows the concept of a power generating plant according to the embodiment of the present invention. Fig. 3 shows the schematic system of the power generating plant according to the embodiment of the present invention. The same constituent members as those in the turbine equipment 1 shown in Fig. 1 are assigned the same member numerals as those in Fig. 1.

As sown in Fig. 2, a gasification furnace 11 for forming a gasification gas (fuel gas) by the reaction of coal, a carbon-based fuel, with O₂ (CO₂, H₂O) is provided, and the gasification furnace 11 is supplied with CO₂ which has been recovered. The gasification gas is sent from a gas purifier 12 to a gas turbine 4 (combustor 3: see Fig. 1), where it is expanded to obtain electricity generating power.

An exhaust gas (CO₂) after finishing of work in the gas turbine 4 has its heat recovered by a heat recovery steam generator (HRSG: corresponding to the exhaust heat recovery means 6 in Fig. 1) 13. Steam generated by the HRSG 13 is sent to a steam turbine 14, where it is expanded to be used as the electricity generating power of the steam turbine 14.

The exhaust gas heat-recovered by the HRSG 13 is condensed by a steam condenser 15 to recover CO₂, and a part of recovered CO₂ is supplied to the gasification furnace 11. The exhaust gas whichhas been heat-recoveredbythe HRSG 13 and which is to be subjected to condensation by the steam condenser 15 (i.e., CO₂ and steam) is sent to the gas turbine 4 (combustor 3: see Fig. 1) to be formed into a combustion gas.

The above-described power generating plant is a combination of the gasification furnace 11 where the recovered CO₂ and O₂ are blown in, and the closed gas turbine for mixing the recycled exhaust gas with O₂ and burning the mixture. This power generating plant is markedly improved in gasification performance, and need not concentrate and separate CO₂ further.

The exhaust gas heat-recovered by the HRSG 13 (i.e., CO₂ and steam) is sent to the gas turbine 4 (combustor 3: see Fig. 1). Thus, it becomes possible to remove impurities therefrom when it is condensed by the steam condenser 15 for recovery of CO₂. This can facilitate the elimination of impurities from the gasification gas from the gas purifier 12, thus making it possible to achieve the simplification of equipment and increase the degree of freedom of equipment design.

Since coal is gasified with CO₂ and O₂, the gasification promoting effect of CO₂ markedly improves the in-furnace coal conversion rate and the cold gas efficiency, as compared with the gasification of coal by air and O₂ and nitrogen and oxygen. Thus, the gasification furnace 11 and the recycle system for char can be rendered compact, achieving a reduction of equipment cost.

Since it is not necessary to concentrate and separate CO₂, the equipment cost and the power required for CO₂ recovery can be reduced markedly, and a high net thermal efficiency (e. g. , HHV 42.0) can be obtained. Furthermore, a molten carbonate fuel cell (MCFC) can be used instead of the gas turbine 4, and the use of MCFC can result in an even higher net thermal efficiency.

A concrete system of the power generating plant will be described based on Fig. 3.

Coal gasification equipment 21 (gasification furnace 11 and gas purifier 12 shown in Fig. 2) is supplied with recovered CO₂, and a gasified gas (fuel gas) is formed there by the reaction of coal with O₂ (CO₂, H₂O). The resulting fuel gas is deprived of solid impurities by a metal filter 22, and is then deprived of sulfur content by a dry desulfurizer 23.

The fuel gas having the sulfur content removed by the dry desulfurizer 23 is charged into the combustor 3, and the fuel gas is burned by the combustor 3 together with a high concentration of O₂ produced by oxygen producing equipment 24. O₂ produced by the oxygen producing equipment 24 is also supplied to the coal gasification equipment 21. As the oxygen producing equipment 24, there can be applied, for example, equipment in which a nitrogen gas is concentrated and removed from air by pressure swing adsorption, and pressurized O₂ is supplied, or equipment by which pure O₂ from cryogenic facilities is pressurized to a predetermined pressure and supplied.

The combustion gas formed by the combustor 3 is formed as a working fluid consisting essentially of CO₂ which is a molecule having a low ratio of specific heats, the ratio of specific heat under constant pressure conditions to specific heat under constant volume conditions. Thus, a temperature change due to a pressure change is suppressed.

That is, the temperature of the working fluid on the outlet side of the gas turbine 4 (i.e., exhaust gas) can be maintained at a high level. In other words, a rise in the temperature at the time of compression by the compressor 2 to be described later can be suppressed, and a fall in the temperature at the time of expansion by the gas turbine 4 can be suppressed. Moreover, the temperature difference between the working fluid on the outlet side of the compressor 2 and the working fluid on the outlet side of the gas turbine 4 can be rendered large.

The combustion gas from the combustor 3 is expanded by the gas turbine 4 to obtain electricity generating power. The exhaust gas after finishing of work in the gas turbine 4 (i.e., the working fluid consisting essentially of CO₂) has its heat recovered by the heat recovery steam generator (HRSG) 13 past the exhaust path 5. The exhaust gas heat-recovered by the HRSG 13 is compressed by the compressor 2. The exhaust gas compressed by the compressor 2 is heated by the regenerative heat exchanger 7, and charged into the combustor 3. The regenerative heat exchanger 7 is fed with a part of the exhaust gas via a path 8 to recover the heat of the exhaust gas.

The exhaust gas on the outlet side of the gas turbine 4 is the working fluid consisting essentially of CO₂, and thus has a low ratio of specific heats. Hence, the difference between the inlet temperature and outlet temperature of each of the compressor 2 and the gas turbine 4 is so small that the thermal efficiency by the regenerative heat exchanger 7 can be improved greatly. That is, with this system, the effect of regeneration on the thermal efficiency is easily obtained.

Steam generated by the HRSG 13 is sent to a steam turbine 14, where it is expanded to provide electricity generating power. Exhaust steam after finishing of work in the steam turbine 14 is condensed by a condenser 25 to form condensate, which is sent to a feed water heater 26 by a feed water pump (not shown). The feed water heater 26 is fed with a part of the exhaust gas heat-recovered by the HRSG 13 to heat the feed water from the condenser 25. When viewed from the exhaust gas side, the feedwater heater 26 serves as a gas cooler. The fluid heated by the feed water heater 26 is sent to the HRSG 13, where it is converted into steam for driving the steam turbine 14.

The exhaust gas cooled by the feed water heater 26 (i.e., CO₂-containing gas) has its water separated by a steam separator 27, and also has its halogen removed by a washing tower (impurities removing means) annexed to the steam separator 27. The exhaust gas deprived of the halogen (i.e., CO₂) is pressurized to a predetermined pressure by a compressor 28, is deprived of mercury by a mercury removal apparatus 2 9 (impurities removing means), and is further deprived of water by a steam separator (cooler) 30. The exhaust gas deprived of water (i.e., CO₂) is pressurized to a predetermined pressure by a compressor 31, and sent to the coal gasification equipment 21. Surplus CO₂ is recovered by such means as liquefaction by pressurization.

The steam condenser 15 shown in Fig. 2 corresponds to the condenser 25 and the steam separators 27, 30 shown in Fig. 3.

With the above-described power generating plant, the gasification gas (fuel gas) formed by the reaction between coal and O₂ (CO₂, H₂O) sent from the oxygen producing apparatus 24 is sent to the combustor 3 through the metal filter 22 and the dry desulfurizer 23, and subjected to oxygen combustion in the combustor 3 to obtain the combustion gas consisting essentially of CO₂ and having a low ratio of specific heats (i.e., working fluid). The combustion gas from the combustor 3 is expanded by the gas turbine 4 to obtain electricity generating power. The exhaust gas after finishing of work in the gas turbine 4 has its heat recovered by the HRSG 13, compressed by the compressor 2, then heated by the regenerative heat exchanger 7, and sent to the combustor 3. The regenerative heat exchanger 7 is fed with a part of the exhaust gas after finishing of work in the gas turbine 4 to recover the heat of the exhaust gas.

The working fluid consists essentially of CO₂ having a low ratio of specific heats. Thus, the temperature of the exhaust gas on the outlet side of the gas turbine 4 can be maintained at a high level, and the rise in the temperature at the time of compression by the compressor 2 can be suppressed. Hence, the temperature difference between the working fluid on the outlet side of the compressor 2 and the working fluid on the outlet side of the gas turbine 4 can be rendered large, and the regeneration efficiency of the regenerative heat exchanger 7 can be increased.

Part of the exhaust heat-recovered by the HRSG 13 (i.e., CO₂) is heat-recovered by the feed water heater 26, deprived of water, and then pressurized to the predetermined pressure by the compressor 31, whereafter it is supplied to the coal gasification equipment 21. During the process of removal of water, the halogen is eliminated by the washing tower, and mercury is removed by the mercury removal apparatus 29. Part of the exhaust pressurized to the predetermined pressure by the compressor 31 (i.e., CO₂) is recovered, for example, by liquefaction.

The exhaust of the gas turbine 4 is subjected to heat recovery, and part of it is charged into the combustor 3, constituting a semi-closed system. Thus, the amount of the exhaust subjected to heat recovery by the HRSG 13 and recovered to the coal gasification equipment 21 and to the outside is small, and impurities can be removed from the small amount of the exhaust. If the removal of impurities is considered in the entire system, therefore, there can be adopted a configuration in which only the metal filter 22 and the dry desulfurizer 23 are provided as the impurities removal apparatus upstream of the combustor 3 of the gas turbine 4, and the devices are provided for removing halogen and mercury from the exhaust gas after heat recovery by the HRSG 13.

Thus, the gas purification equipment can be simplified, and a loss in the available energy associated with heat exchange required for impurities removal, including the recovery side, can be dramatically decreased.

On the other hand, steam generated by the HRSG 13 is sent to the steam turbine 14 to drive the steam turbine 14. Exhaust steam therefrom is condensed by the condenser 25, and the condensate is fed to the feed water heater 26. The fluid heated thereby is sent to the HRSG 13, where it is formed into steam for driving the steam turbine 14. In this manner, a combined cycle power plant composed of the gas turbine 4 and the steam turbine 14 is constructed.

In Fig. 3, the example in which the exhaust gas is compressed by the compressors 28 and 31 to the predetermined pressure for removal of impurities, and to the predetermined pressure for supply to the coal gasification equipment is taken for illustration. However, the number and arrangement of the compressors are arbitrary, and the compressors can be arranged, as appropriate, according to the scale of the equipment or the configuration of the instruments. Besides, there may be a configuration in which the compressor 2, the gas turbine 4, and the steam turbine 14 are arranged on a single shaft, and a power generator is provided. Alternatively, there may be a configuration in which a shaft bearing the compressor 2 and the gas turbine 4, and a shaft bearing the steam turbine 14 are arranged in parallel, and power generators are provided, respectively, for them.

The above-described power generating plant can be configured as a power generating plant equipped with the gas turbine 4, which can increase efficiency without upsizing the plant.

### Industrial Applicability

The present invention can be utilized in the industrial field of turbine equipment for obtaining power by expanding a combustion fluid.

The present invention can also be utilized in the industrial field of a power generating plant equipped with a gasification furnace for forming a fuel gas from a carbon-based fuel, and a gas turbine for obtaining power by use of a working fluid produced by combustion of the fuel gas from the gasification furnace.

## Claims

1. Turbine equipment, comprising:
a combustor for forming a combustion gas consisting essentially of a molecule having a low ratio of specific heats; and
a gas turbine for obtaining power by expanding the combustion gas of the combustor,
wherein the combustion gas is used as a working fluid, and a temperature difference between the combustion gas of the combustor and the working fluid expanded by the gas turbine is suppressed.

2. The turbine equipment according to claim 1,
wherein
a fuel for the combustor is a fuel rich in carbon components.

3. The turbine equipment according to claim 1,
wherein
a fuel for the combustor is a fuel obtained by gasifying a fuel rich in carbon components.

4. The turbine equipment according to claim 3,
wherein
the fuel rich in carbon components to be gasified is coal.

5. The turbine equipment according to any one of claims 1 to 4, wherein
the working fluid is a fluid containing CO₂.

6. The turbine equipment according to any one of claims 1 to 5, further comprising:
a compressor for compressing the working fluid, which is an exhaust after finishing of work in the gas turbine, and sending the compressed working fluid to the combustor; and
a regenerative heat exchanger for raising a temperature of the compressed working fluid, which has been compressed by the compressor, by means of the exhaust after finishing of work in the gas turbine.

7. The turbine equipment according to claim 6,
wherein
the combustor burns a fuel gas by use of O₂.

8. The turbine equipment according to claim 7,
wherein
the O₂ is supplied to the compressed working fluid, which has been compressed by the compressor, or to the working fluid whose temperature has been raised by the regenerative heat exchanger.

9. A power generating plant, comprising:
a gasification furnace for forming a fuel gas by reaction of a carbon-based fuel;
a combustor for burning the fuel gas formed by the gasification furnace;
a gas turbine for obtaining power by expanding a combustion gas from the combustor;
a heat recovery steam generator for recovering heat from an exhaust after finishing of work in the gas turbine to generate steam; and
a compressor for compressing a part of the exhaust after finishing of work in the gas turbine, and sending a compressed working fluid to the combustor.

10. The power generating plant according to claim 9, further comprising
a regenerative heat exchanger for raising a temperature of the compressed working fluid, which has been compressed by the compressor, by means of the exhaust after finishing of work in the gas turbine.

11. The power generating plant according to claim 9 or 10, further comprising
cooling means for obtaining high purity CO₂ by cooling a part of an exhaust from the heat recovery steam generator to condense and remove water.

12. The power generating plant according to claim 11, further comprising
a supply system for supplying the high purity CO₂ obtained by the cooling means to the gasification furnace.

13. The power generating plant according to claim 12, wherein
the gasification furnace is a coal gasification furnace for forming a coal gasif icationgas by a reaction between coal and a fluid containing the high purity CO₂.

14. The power generating plant according to any one of claims 9 to 13, further comprising
impurities removing means for removing impurities from a part of the exhaust after finishing of work in the gas turbine.

15. The power generating plant according to any one of claims 9 to 14, further comprising
a steam turbine for obtaining power by expanding the steam generated by the heat recovery steam generator.
